(19) **Europäisches Patentamt**
**European Patent Office**
**Office européen des brevets**

(11) **EP 4 344 546 A2**

(12) **EUROPEAN PATENT APPLICATION**

(43) Date of publication:
**03.04.2024 Bulletin 2024/14**

(21) Application number: **24157500.0**

(22) Date of filing: **30.12.2019**

(51) International Patent Classification (IPC):
***A01N 43/56*** (2006.01)

(52) Cooperative Patent Classification (CPC):
(C-Sets available)
**A01N 47/04; A01N 37/24; A01N 43/08;
A01N 43/10; A01N 43/32; A01N 43/40;
A01N 43/56; A01N 43/78; A01N 45/02; A01N 47/38**

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **31.12.2018 US 201862786591 P**

(62) Document number(s) of the earlier application(s) in accordance with Art. 76 EPC:
**19835829.3 / 3 905 883**

(71) Applicant: **ADAMA MAKHTESHIM LTD.
8410001 Beer Sheva (IL)**

(72) Inventors:
• **POLLMANN, Bernardo
78244 Gottmadingen (DE)**

• **HUGO, Kalla
8804 Zürich, Au (CH)**
• **CHEYLAN, Simon
92500 Rueil-Malmaison (FR)**
• **HUART, Gerald
91460 Marcoussis (FR)**

(74) Representative: **Modiano, Gabriella Diana et al
Modiano & Partners (DE)
Steinsdorfstrasse, 14
80538 München (DE)**

Remarks:
This application was filed on 14-02-2024 as a divisional application to the application mentioned under INID code 62.

(54) **FUNGICIDAL MIXTURE**

(57)     The present invention relates to fungicidal mixtures comprising a) a succinate dehydrogenase inhibitor fungicide; and b) folpet.

**EP 4 344 546 A2**

(52)  Cooperative Patent Classification (CPC): (Cont.)

C-Sets
**A01N 47/04, A01N 37/24;**
**A01N 47/04, A01N 43/08;**
**A01N 47/04, A01N 43/10;**
**A01N 47/04, A01N 43/32;**
**A01N 47/04, A01N 43/40;**
**A01N 47/04, A01N 43/56;**
**A01N 47/04, A01N 43/78;**
**A01N 47/04, A01N 45/02;**
**A01N 47/04, A01N 47/38**

**Description**

RELATED APPLICATION

This application claims the benefit of priority of U.S. Provisional Patent Application No. 62/786,591 filed on 31 December 2018, the contents of which are incorporated herein by reference in their entirety.

FIELD AND BACKGROUND OF THE INVENTION

The present subject matter relates to a fungicidal combination that comprises a combination of a) a succinate dehydrogenase inhibitor fungicide; and b) folpet, and to a method for controlling fungal disease by using said combination.
Fungicides are an integral and important tool to control diseases, as well as to improve yields and quality of the crops.
Succinate dehydrogenase inhibitor (SDHI) fungicides are known in the art to have a broad spectrum of activity and have very good efficacy against several fungal diseases.
Septoria tritici blotch, also called Septoria leaf spot or speckled leaf blotch of wheat is caused by the fungus *Mycosphaerella graminicola* (asexual stage *Zymoseptoria tritici,* synonym *Septoria tritici*). Septoria tritici blotch survives from one season to the next on stubble. Following rain or heavy dew in late autumn and early winter, wind home spores (ascospores) are released from fruiting bodies (perithecia) embedded in the stubble of previously infected plants. These spores can be spread over large distances. Septoria develops fast resistance against fungicides.
Folpet is a protectant fungicide from the phthalimide chemical group with multisite contact activity. Multisite fungicides display a low risk to develop resistance and are effective mixing/alternating partners for medium to high risk fungicides. Further to protecting and prolonging the lifespan of highly effective medium to high resistance risk fungicides, multisite fungicides provide added levels and spectrum of disease control. Multisite fungicides are considered a valuable tool to manage resistance by preventing or delaying its development to many pathogens in many crops.
Mixtures of SDHI fungicides with triazoles or strobilurins are not sufficient to avoid resistance development.
As crop tolerances are decreasing, and resistance being increasingly observed, there is a need for a combination of fungicides that allows for broader disease control spectrum and has a lower dosage requirement for control of fungi.
In light of the above, there is still a need for novel fungicidal compositions that exhibit synergistically enhanced action, a broader scope of activity and reduced cost of treatment.
It is an object of the present invention, to provide a fungicidal mixture of a) a succinate dehydrogenase inhibitor fungicide; and b) folpet which, at a reduced total amount of active compounds applied, have improved activity against harmful fungi, in particular for certain indications. The mixture allows better control of harmful fungi than is possible with the solo use of the individual compounds, thereby providing a synergistic mixture.

SUMMARY OF THE INVENTION

The present subject matter relates to a fungicidal mixture comprising, as active components a) a succinate dehydrogenase inhibitor fungicide; and b) folpet. In some embodiments, the succinate dehydrogenase inhibitor fungicide is fluxapyroxad. The present subject matter also relates to a synergistic fungicidal mixture comprising, as active components a) a succinate dehydrogenase inhibitor fungicide; and b) folpet.
The present subject matter also relates to a fungicidal composition comprising, as active components a) a succinate dehydrogenase inhibitor fungicide; and b) folpet. The present subject matter also relates to a synergistic fungicidal composition comprising, as active components a) a succinate dehydrogenase inhibitor fungicide; and b) folpet.
The present subject matter also relates to a method of controlling fungal disease comprising applying to the locus of the plant a mixture or a composition comprising, as active components a) a succinate dehydrogenase inhibitor fungicide; and b) folpet. In some embodiments, the mixture of composition may be synergistic.
In some embodiments, the succinate dehydrogenase inhibitor fungicide is fluxapyroxad.

DETAILED DESCRIPTION OF SPECIFIC EMBODIMENTS OF THE INVENTION

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.
As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes a habitat, breeding ground, plant, propagation material, soil, area, material or environment in which a pest is growing or may grow.

As used herein, the terms "control" or "controlling" refers to preventing disease, protecting plants from disease, delaying the onset of disease, and combating or killing disease.

The term "contacting", as used herein, refers to applying the compounds and compositions of the invention to the plant, to a site of infestation by fungi, to a potential site of infestation by the fungi, which may require protection from infestation, or the environment around the habitat or potential habitat of the fungi. The application may be by methods described in the present invention such as by spraying, dipping, etc.

As used herein, the term "effective amount" refers to an amount of the agrochemical composition or of the mixture which is sufficient for controlling harmful fungi on crop plants and does not cause any significant damage to the treated crop plants.

As used herein, the term "mixture" or "combination" refers, but is not limited to, a combination in any physical form, e.g., blend, solution, alloy, or the like.

As used herein, the term "cultivated plants" includes plants which have been modified by breeding, mutagenesis or genetic engineering. Genetically modified plants are plants, which their genetic material has been modified by the use of recombinant DNA techniques. Typically, one or more genes have been integrated into the genetic material of such a plant in order to improve certain properties of the plant.

The term "plant health" comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

As used herein, the phrase "agriculturally acceptable carrier" means carriers which are known and accepted in the art for the formation of compositions for agricultural or horticultural use.

Throughout the application, descriptions of various embodiments use the term "comprising"; however, it will be understood by one of skill in the art, that in some specific instances, an embodiment can alternatively be described using the language "consisting essentially of" or "consisting of."

The term "a" or "an" as used herein includes the singular and the plural, unless specifically stated otherwise. Therefore, the terms "a," "an" or "at least one" can be used interchangeably in this application.

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges.

Fungicidal Mixture

It has been surprisingly found that by combining fungicides having different modes of action, i.e. a fungicide which inhibits succinate dehydrogenase in complex II of the mitochondrial respiratory chain (SDHI) and a multi-site fungicide such as folpet, fungicidal mixtures that exhibit a broad spectrum of control and high efficacy are produced.

In some embodiments, the combination provides a higher fungicidal activity than that envisaged on the basis of the sum of activities of each of the fungicides found therein. Such a combination allows the reduced dosages of the individual fungicides which can damage agriculturally important plants.

Thus, an enhanced, synergistic fungicidal activity is observed when a fungicidal mixture comprising, as active components a) a succinate dehydrogenase inhibitor fungicide; and b) folpet is used for the control of fungi.

In an embodiment, the succinate dehydrogenase inhibitor is selected from benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid. In one representative embodiment, the succinate dehydrogenase inhibitor compound is fluxapyroxad.

In some embodiments, the fungicidal mixture comprises a combination of a) fluxapyroxad, and b) folpet.

It has been found that the combination of a succinate dehydrogenase inhibitor fungicide with folpet resulted in surprising and unexpected advantages. It was found that the combination of a succinate dehydrogenase inhibitor fungicide with folpet resulted in an enhancement of the efficacy, and a reduction in the occurrence of fungal disease. It was also found that the addition of folpet to a succinate dehydrogenase inhibitor fungicide provided a delay in resistance development.

Due to the resistance reducing properties of a mixture of a succinate dehydrogenase inhibitor fungicide and folpet, a second application of the succinate dehydrogenase inhibitor fungicide during a crop season may be applied, thereby providing a further tool in combating the disease.

It has been surprisingly found that when mixing a succinate dehydrogenase inhibitor fungicide with folpet, the uptake of the partner product is not adversely affected by the inclusion of folpet. This may lead to an elevated efficacy in the field.

The weight ratio between the succinate dehydrogenase inhibitor and folpet cannot generally be defined, as it varies depending upon various conditions such as the type of the formulation, weather conditions, the type of crop and the type of pests.

In one embodiment, the weight ratio of succinate dehydrogenase inhibitor to folpet is from about 1:100 to 100:1. In another embodiment, the weight ratio of succinate dehydrogenase inhibitor to folpet is from about 1:25 to 25:1. In yet another embodiment, the weight ratio of succinate dehydrogenase inhibitor to folpet is from about 1:10 to 10:1. In a further embodiment, the weight ratio of succinate dehydrogenase inhibitor to folpet is from about 1:2 to 2:1. In another embodiment, the weight ratio of succinate dehydrogenase inhibitor to folpet is about 1:1.

The weight ratio of the succinate dehydrogenase inhibitor to folpet may be an intermediate range selected from the above indicated ratios.

In an embodiment, the weight ratio of fluxapyroxad to folpet is from about 1:100 to 100:1. In another embodiment, the weight ratio of fluxapyroxad to folpet is from about 1:25 to 25:1. In yet another embodiment, the weight ratio of fluxapyroxad to folpet is from about 1:10 to 10:1. In a further embodiment, the weight ratio of fluxapyroxad to folpet is from about 1:2 to 2:1. In a particular embodiment, the weight ratio of fluxapyroxad to folpet is about 1:1. In an example, the weight ratio of fluxapyroxad to folpet is from about 1:10 to about 1:6.

In another embodiment, a method for control of fungal disease by applying to the locus of the plant a mixture of a) a succinate dehydrogenase inhibitor fungicide; and b) folpet is provided.

For example, a method for control of fungal disease by applying to the locus of the plant a mixture of a) fluxapyroxad; and b) folpet is provided.

In a specific embodiment, a method for control of fungal disease by applying to the locus of the plant a synergistic mixture of a) a succinate dehydrogenase inhibitor fungicide; and b) folpet is provided.

For example, a method for control of fungal disease by applying to the locus of the plant a synergistic mixture of a) fluxapyroxad; and b) folpet is provided.

A mixture of a) a succinate dehydrogenase inhibitor fungicide; and b) folpet or the corresponding formulations are applied thereby treating the harmful fungi, their habitat or the plants, seeds, or soil with a fungicidally effective amount of the mixture or, in the case of separate application, of the mixture of a) a succinate dehydrogenase inhibitor fungicide; and b) folpet. Application can be before or after the infection by harmful fungi.

In yet another embodiment, the plants include wheat, rye, barley, triticale, oats, sorghum, rice, corn, vegetables, such as tomatoes, peppers, cucurbits, cabbage, broccoli, lettuce, spinach, cauliflower, melon, watermelon, cucumbers, carrots, onions and potatoes, tobacco, pome and stone fruits, such as walnuts, kiwi, berries, olive, almonds, pineapples, apples, pears, plums, peaches, and cherries, grapes, citrus fruit, such as oranges, lemons, grapefruits and limes, sugar beet, cotton, soybean, oilseed rape, sunflower, peanuts, coffee, beans and sugar cane.

In still another embodiment, the plants include cultivated plants which tolerate the action of herbicides, fungicides or insecticides as a result of breeding and/or genetically engineered methods.

The mixture of a) a succinate dehydrogenase inhibitor fungicide; and b) folpet applied, has excellent activity against a broad spectrum of phytopathogenic fungi. For example, the phytopathogenic fungi may be one or more of Alternaria species on vegetables, oilseed rape, sugar beet and fruit and rice, such as, A. solani or A. alternata on potatoes and tomatoes; Aphanomyces species on sugar beet and vegetables; Ascochyta species on cereals and vegetables; Bipolaris and Drechslera species on corn, cereals, rice and lawns, for example, D. maydis on corn; Blumeria graminis (powdery mildew) on cereals; Botlytis cinerea (gray mold) on strawberries, vegetables, flowers and grapevines; Bremia lactucae on lettuce; Cercospora species on corn, soybeans, rice, sugar beet and coffee; Cochliobolus species on corn, cereals, rice, for example Cochliobolus sativus on cereals, Cochliobolus miyabeanus on rice; Colletotricum species on soybeans and cotton; Drechslera species, Pyrenophora species on corn, cereals, rice and lawns, for example, D. teres on barley or D. tritici-repentis on wheat; Esca on grapevines, caused by Phaeoacremonium chlamydosporium, Ph. Aleophilum and Formitipora punctata (syn. Phellinus punctatus), Exserohilum species on corn; Erysiphe cichoracearum and Sphaerotheca fuliginea on cucumbers; Fusarium and Verticillium species on various plants, for example, Fusarium graminearum or Fusarium culmorum on cereals or F. oxysporum on a multitude of plants, such as, for example, tomatoes; Gaeumanomyces graminis on cereals; Gibberella species on cereals and rice (for example Gibberella fujikuroi on rice); Grainstaining complex on rice; Helminthosporium species on corn and rice; Hemileia vastatrix on coffee; Michrodochium nivale on cereals; Mycosphaerella species on cereals, bananas and peanuts, for example, M. graminicola on wheat or M. fijiensis on bananas; Peronospora species on cabbage and bulbous plants, for example, P. brassicae on cabbage or P. destructor on onions; Phakopsara pachyrhizi and Phakopsara meibomiae on soybeans; Phomopsis species on soybeans and sunflowers; Phytophthora infestans on potatoes and tomatoes; Phytophthora species on various plants, for example, P. capsici on bell pepper; Plasmopara viticola on grapevines; Podosphaera leucotricha on apples; Pseudocercosporella herpotrichoides on cereals; Pseudoperonospora on various plants, for example, P. cubensis on cucumber or P. humili on hops; Puccinia species on various plants, for example, Puccinia recondite, Puccinia triticina, Puccinia striiformis, Puccinia hordei or Puccinia graminis on cereals or Puccinia asparagi on asparagus; Pyrlcularia oryzae, Corticium sasakii, Sarocladium oryzae, S. attenuatum, Entyloma oryzae on rice; Pyricularia grisea on lawns and cereals; Pythium spp. on lawns, rice, corn, cotton, oilseed rape, sunflowers, sugar beet, vegetables and other plants, for example, P. ultiumum on various plants, P. aphanidermatum on lawns; Ramularia species on cereals, barley and cotton, for example, Ramularia collo-cygni on barly and Ramularia areola on cotton Rhizoctonia species on cotton, rice, potatoes, lawns, corn, oilseed rape, sugar beet, vegetables and on various plants, for example, R. solani on beet and various plants; Rhynchosporium secalis on barley, rye and triticale; Sclerotinia species on oilseed rape and sunflowers; Septoria tritici and Stagonospora nodorum on wheat; Erysiphe species on wheat such as Erysiphe graminis; Erysiphe (syn. Uncinula) necator on grapevines; Setospaeria species on corn and lawns; Sphacelotheca reilinia on corn; Thievaliopsis species on soybeans and cotton; Tilletia species on cereals; Ustilago species on cereals, corn and sugar cane, for example, U. maydis on corn; Venturia species (scab) on apples and pears, for example, V. inaequalis on apples.

Application of the inventive compositions to plants may also lead to an increase in the crop yield.

In an embodiment, the succinate dehydrogenase inhibitor fungicide and folpet can be applied in the early stages of the crop cycle, such as for example pre-sowing or post-sowing of the crop. In a specific embodiment, a mixture of fluxapyroxad and folpet can be applied in the early stages of the crop cycle. The mixture of fluxapyroxad may be applied during the T1 stage of growth. The early application would allow folpet to provide early protection during the early stages of growth and the SDHI, for example fluxapyroxad, to provide long lasting protectant efficacy.

The effective application rates of the succinate dehydrogenase inhibitor fungicide and folpet cannot generally be defined, as it varies depending upon various conditions such as the type of the formulation, weather conditions, the type of crop and the type of pests.

The application rates of the combination may vary, depending on the desired effect. In an embodiment, depending on the desired effect, the application rates of the mixture according to the invention are from 10 g/ha to 10000 g/ha, particularly from 50 to 5000 g/ha, more particularly from 100 to 2000 g/ha.

Correspondingly, the application rates for the succinate dehydrogenase inhibitor fungicide are generally from 1 to 1000 g/ha, preferably from 10 to 900 g/ha, in particular from 20 to 750 g/ha. In an example, the application rates of a succinate dehydrogenase inhibitor fungicide such as fluxapyroxad may be from 20 to 200 g/ha.

Correspondingly, the application rates for folpet are generally from 1 to 5000 g/ha, preferably from 10 to 2500 g/ha, in particular from 20 to 1000 g/ha. In an example, the application rates of folpet may be from 500 to 1000 g/ha.

In another embodiment, the succinate dehydrogenase inhibitor fungicide and folpet can be applied simultaneously, that is jointly or separately, or in succession, in sequence, in the case of separate application. The application of the two compounds jointly or separately generally does not have any effect on the result of the control measures.

That is, each of succinate dehydrogenase inhibitor fungicide and folpet may be applied jointly or in succession. In one example, succinate dehydrogenase inhibitor fungicide and folpet are prepared separately, and the individual formulations are applied as is, or diluted to predetermined concentrations. In a further example, succinate dehydrogenase inhibitor fungicide and folpet are prepared separately, and the formulations are mixed when diluted to a predetermined concentration. In another example, succinate dehydrogenase inhibitor fungicide and folpet are formulated together, and the formulation is applied as it is, or the formulation is diluted to a predetermined concentration.

For example, fluxapyroxad and folpet can be applied simultaneously, that is jointly or separately, or in succession, the sequence, in the case of separate application, generally not having any effect on the result of the control measures. In one example, fluxapyroxad and folpet are prepared separately, and the individual formulations are applied as is, or diluted to predetermined concentrations. In a further example, fluxapyroxad and folpet are prepared separately, and the formulations are mixed when diluted to a predetermined concentration. In another example, fluxapyroxad and folpet are formulated together, and the formulation is applied as it is, or the formulation is diluted to a predetermined concentration.

The mixture of active substances can be diluted and applied in a customary manner, for example by watering (drenching), drip irrigation, spraying, and atomizing.

In yet another embodiment, the synergistic composition may be applied in various mixtures or combinations of succinate dehydrogenase inhibitor fungicide and folpet, for example in a single "ready-for-use" form, or in a combined spray mixture composed from separate formulations of the single active ingredients, such as a "tank-mix" form.

In yet another embodiment, the composition is applied in the form of a ready-for-use formulation comprising the succinate dehydrogenase inhibitor fungicide and folpet. This formulation can be obtained by combining the two active ingredients in a fungicidal effective amount with an agriculturally acceptable carrier, a surfactant or other application-promoting adjuvant customarily employed in formulation technology.

For example, the composition of the present invention is preferably applied in the form of a ready-for-use formulation comprising fluxapyroxad and folpet, which can be obtained by combining the three active ingredients with an agriculturally acceptable carrier, a surfactant or other application-promoting adjuvant customarily employed in formulation technology.

The present composition may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

According to an embodiment, the composition comprises at least one additional component selected from the group of surfactants, solid diluents and liquid diluents.

Such compositions can be formulated using agriculturally acceptable carriers, surfactants or other application-promoting adjuvants customarily employed in formulation technology and formulation techniques that are known in the art. Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

In an embodiment, the amount of the mixture of active ingredients in the composition is from about 0.1%, 0.5%, 1%, 1.5%, 2%, 2.5%, 3%, 3.5%, 4%, 4.5%, 5% to about 90%, 93%, 95%, 98%, 99% based on the total weight of the composition.

In another embodiment, the combined amount of the succinate dehydrogenase inhibitor fungicide and folpet together in the ready-to-use formulations is 1-95 wt. %, particularly 75-95 wt. %, based on the total weight of the formulation.

For example, the combined amount of fluxapyroxad and folpet in the ready-to-use formulations according to the invention is 0.01-95 wt.%, particularly 0.1-90 wt. %, more particularly 1-90 wt. %, even more particularly is 10-90 wt. %, based on the total weight of the formulation.

The present composition may include additional crop protection agents, for example insecticides, herbicides, fungicides, bactericides, nematicides, molluscicides, growth regulators, biological agents, fertilizers, or mixtures thereof. However, for the avoidance of doubt it is understood that such additional crop protection agents are unnecessary to achieve the desired control of fungal disease as achieved by the present combinations. Accordingly, the present fungicidal compositions and mixtures may be limited to containing a succinate dehydrogenase inhibitor fungicide (e.g. fluxapyroxad) and folpet, as the only crop protection agents present.

In another embodiment, the present invention provides a kit comprising a synergistic fungicidal composition as described herein, or components thereof. Such kits may comprise, in addition to the aforementioned active components, one or more additional active and/or inactive ingredients, either within the provided fungicidal composition or separately. Certain kits comprise a) a succinate dehydrogenase inhibitor fungicide and b) folpet, each in a separate container, and each optionally combined with a carrier.

As noted above, the compositions, kits and methods described herein exhibit a synergistic effect. A synergistic effect exists wherever the action of a combination of active components is greater than the sum of the action of each of the components alone. Therefore, a synergistically effective amount (or an effective amount of a synergistic composition or combination) is an amount that exhibits greater fungicidal activity than the sum of the fungicidal activities of the individual components.

The following examples illustrate the practice of the present invention in some of its embodiments but should not be construed as limiting the scope of the invention. Other embodiments will be apparent to one skilled in the art from consideration of the specification and examples. It is intended that the specification, including the examples, is considered exemplary only without limiting the scope and spirit of the invention.

EXAMPLE 1

An experiment was conducted to evaluate the fungicidal control of *Ramularia collo-cygni* on winter barley with a dehydrogenase inhibitor fungicide (fluxapyroxad), and folpet, alone, and in binary mixtures.

The experiments were conducted by applying a commercially available composition of fluxapyroxad (Imtrex®) and folpet (MCW-296 SC) alone or together. The compositions were diluted with water to the stated concentration of the active compound.

The following active ingredients and their mixtures were evaluated:

- Fluxapyroxad 90 gr (A.I.)/ha

- Folpet 750 gr (A.I.)/ha

- Fluxapyroxad + Folpet 90 gr (A.I.)/ha + 750 gr (A.I.)/ha

To test for fungicidal control of *Ramularia collo-cygni,* the winter barley was sprayed with each of the above treatments. Each of the above treatments were applied twice, the 2nd treatment occurring 14 days after the first treatment. The treatments were composed of 4 replicates.

Evaluations were performed at 38 days and 44 days after the second treatment. At these times the severity of the *Ramularia collo-cygni* was determined. At the time of the 1st evaluation (38 days after the second treatment) the severity of the infection of *Ramularia collo-cygni* on the winter barley was 85.6%. At the time of the 2nd evaluation (44 days after the second treatment) the severity was 100%.

Table 1 below summarize the calculated synergy (Colby ratio) for the mixture of fluxapyroxad and folpet at each of the evaluation periods.

Table 1: Effect of tank mix of Fluxapyroxad + Folpet on *Ramularia collo-cygni*

| AI | Application rate (gr/ha) | % control observed | | % control expected | | Colby Ratio ole | |
|---|---|---|---|---|---|---|---|
| | | 38 Days after 2nd application | 44 Days after 2nd application | 38 Days after 2nd application | 44 Days after 2nd application | 38 Days after 2nd application | 44 Days after 2nd application |
| Fluxapyroxad | 90 | 47.1 | 12.2 | | | | |
| Folpet | 750 | 30.3 | 9.7 | | | | |
| Fluxapyroxad + Folpet | 90+750 | 92.6 | 92.8 | 63.1 | 20.7 | **1.47** | **4.48** |

The visually determined percentages of infected leaf areas may be converted into efficacies in % of the untreated control: The efficacy (E) is calculated as follows using Abbott's formula:

$$E = (1 - A/B) \cdot 100$$

A corresponds to the fungicidal infection of the treated plants in % and

B corresponds to the fungicidal infection of the untreated (control) plants in %.

An efficacy of 0 means that the infection level of the treated plants corresponds to that of the untreated control plants; an efficacy of 100 means that the treated plants are not infected.

A synergistic effect exists whenever the action of an active ingredient combination is greater than the sum of the actions of the individual components.

In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22. The action expected for a given combination of two active components can be calculated as follows:

$$E = X + Y - \frac{XY}{100}$$

in which E represents the expected percentage of fungicidal control for the combination of the two fungicides at defined doses (for example equal to x and y respectively), X is the percentage of fungicidal control observed by the compound (I) at a defined dose (equal to x), Y is the percentage of fungicidal control observed by the compound (II) at a defined dose (equal to y). When the percentage of fungicidal control observed for the combination is greater than the expected percentage, there is a synergistic effect.

The table above clearly shows that the observed activity of the active compound combination according to the invention is greater than the calculated activity, i.e. a synergistic effect is present.

While the present invention has been shown and described with reference to preferred embodiments thereof, it will be understood by those skilled in the art that many alternatives, modifications and variations may be made thereto without departing from the spirit and scope thereof. Accordingly, it is intended to embrace all such alternatives, modifications, and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference.

In addition, any priority document(s) of this application are hereby incorporated herein by reference in their entirety.

The present invention is further defined by the following items:

1. A fungicidal mixture comprising, as active components a) a succinate dehydrogenase inhibitor fungicide; and b) folpet.

2. The mixture of item 1, wherein the succinate dehydrogenase inhibitor is selected from benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid.

3. The mixture of item 2, wherein the succinate dehydrogenase inhibitor is fluxapyroxad.

4. The mixture of any one of items 1-3, wherein the weight ratio of the succinate dehydrogenase inhibitor and folpet is from 1:100 to 100:1.

5. The mixture of any one of items 1-4, wherein the mixture provides a synergistic effect.

6. The mixture of any one of items 1-5, wherein the succinate dehydrogenase inhibitor, and folpet are applied jointly or in a succession.

7. The mixture of any one of items 1-6, wherein said mixture is used to provide a rate of application of from 0.1 to 100 kg/ha.

8. A fungicidal composition comprising, as active components a) a succinate dehydrogenase inhibitor fungicide; and b) folpet.

9. The composition of item 8, characterized in that it further comprises an agriculturally acceptable carrier.

10. The composition of item 8 or 9, further comprising at least one surfactant, solid diluent, liquid diluent, or a combination thereof.

11. The composition of any one of items 8-10, wherein the succinate dehydrogenase inhibitor is selected from benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid.

12. The composition of item 11, wherein the succinate dehydrogenase inhibitor is fluxapyroxad.

13. The composition of any one of items 8-12, wherein the weight ratio of the succinate dehydrogenase inhibitor and folpet is from 1:100 to 100:1.

14. The composition of any one of items 8-13, wherein the succinate dehydrogenase inhibitor and folpet are present in a combined amount ranging from 5% to 80% by weight of the total weight of all components in the composition.

15. The composition of any one of items 8-14, wherein the composition provides a synergistic effect.

16. The composition of any one of items 8-15, wherein said composition is used to provide a rate of application of from 0.1 to 100 kg/ha.

17. A synergistic fungicidal mixture comprising, as active components a) a succinate dehydrogenase inhibitor fungicide; and b) folpet.

18. The mixture of item 17, wherein the succinate dehydrogenase inhibitor is selected from benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid.

19. The mixture of item 18, wherein the succinate dehydrogenase inhibitor is fluxapyroxad.

20. The mixture of any one of items 17-19, wherein the weight ratio of the succinate dehydrogenase inhibitor and folpet is from 1:100 to 100:1.

21. The mixture of any one of items 17-20, wherein the succinate dehydrogenase inhibitor, and folpet are applied jointly or in a succession.

22. The mixture of any one of items 1-6, wherein said mixture is used to provide a rate of application of from 0.1 to 100 kg/ha.

23. A synergistic fungicidal composition comprising, as active components a) a succinate dehydrogenase inhibitor fungicide; and b) folpet.

24. The composition of item 23, characterized in that it further comprises an agriculturally acceptable carrier.

25. The composition of item 23 or 24, further comprising at least one surfactant, solid diluent, liquid diluent, or a combination thereof.

26. The composition of any one of items 23-25, wherein the succinate dehydrogenase inhibitor is selected from benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid.

27. The composition of item 26, wherein the succinate dehydrogenase inhibitor is fluxapyroxad.

28. The composition of any one of items 23-27, wherein the weight ratio of the succinate dehydrogenase inhibitor and folpet is from 1:100 to 100:1.

29. The composition of any one of items 23-28, wherein the succinate dehydrogenase inhibitor and folpet are present in a combined amount ranging from 5% to 80% by weight of the total weight of all components in the composition.

30. The composition of any one of items 23-29, wherein said composition is used to provide a rate of application of from 0.1 to 100 kg/ha.

31. A method of controlling fungal disease comprising applying to the locus of the plant a mixture of any one of items 1-7 or 17-22, or a composition of any one of items 8-16 or 23-30.

32. A method of controlling fungal disease comprising applying to the locus of the plant a mixture of a) a succinate dehydrogenase inhibitor fungicide; and b) folpet.

33. A method of controlling fungal disease comprising applying to the locus of the plant a synergistically effective amount of a mixture of a) a succinate dehydrogenase inhibitor fungicide; and b) folpet.

34. The method of any one of items 31-33, wherein said mixture or composition is applied in an amount of from 0.1 to 100 kg/ha.

## Claims

1. A method of controlling *Fusarium graminearum or Fusarium culmorum*, on cereals, the method comprising applying to the locus of a plant a fungicidal mixture or composition comprising, as active components, a succinate dehydrogenase inhibitor fungicide and folpet in a weight ratio from 1:100 $\pm$10% to 100:1$\pm$10%

2. The method as claimed in claim 1, wherein the succinate dehydrogenase inhibitor fungicide and Folpet are in a weight ratio from 1:10 $\pm$10% to 10:1$\pm$10%.

3. The method as claimed in claim 1 or 2, wherein the succinate dehydrogenase inhibitor fungicide and Folpet are in a weight ratio from 1:10 $\pm$10% to 1:6$\pm$10%.

4. The method as claimed in any of the preceding claims, wherein the succinate dehydrogenase inhibitor fungicide is selected from the group of benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid.

5. The method as claimed in any of the preceding claims, wherein the succinate dehydrogenase inhibitor fungicide is fluxapyroxad.

6. The method as claimed in any of the preceding claims wherein folpet is applied at application rates from 1 $\pm$10% to 5000 $\pm$10% g a.i./ha.

7. The method as claimed in any of the preceding claims wherein the succinate dehydrogenase inhibitor is applied at application rates from 1$\pm$10% to 1000$\pm$10% g a.i/ha.

8. The method as claimed in any of the preceding claims wherein the succinate dehydrogenase inhibitor is applied at application rates from 20$\pm$10% to 750$\pm$10% g a.i./ha.

9. The method as claimed in claim 5 wherein fluxapyroxad is applied at application rates from 20$\pm$10% to 200$\pm$10% g a.i/ha.

**10.** The method as claimed in any of the preceding claims, wherein folpet is applied at application rates of 500±10% to 1000±10% g a.i./ha.

**11.** The method as claimed in any of the preceding claims, wherein the succinate dehydrogenase inhibitor fungicide and folpet are applied jointly, separately, or in succession.

**12.** A cereals pathogen fungicide comprising a succinate dehydrogenase inhibitor fungicide, such as fluxapyroxad, and folpet in a weight ratio from about 1:100±10% to about 100:1±10% wherein the cereals pathogen is selected from the group of *Fusarium graminearum* and *Fusarium culmorum* species.

**13.** The cereals pathogen fungicide as claimed in claim 12, wherein the succinate dehydrogenase inhibitor fungicide, such as fluxapyroxad, and folpet are in a weight ratio from about 1:10±10% to about 10:1±10%.

**14.** The cereals pathogen fungicide as claimed in claim 13, wherein the succinate dehydrogenase inhibitor fungicide, such as fluxapyroxad, and folpet are in a weight ratio from about 1:10±10% to about 1:6±10%.

**15.** The cereals pathogen fungicide of any of claims 12-14, wherein the succinate dehydrogenase inhibitor fungicide, such as fluxapyroxad, is selected from the group of benzovindiflupyr, bixafen, fluxapyroxad, furametpyr, isopyrazam, penflufen, penthiopyrad, fluindapyr, sedaxane, benodanil, flutolanil, mepronil, isofetamid, fluopyram, fenfuram, carboxin, oxycarboxin, thifluzamide, pydiflumetofen and boscalid.

**16.** The cereals pathogen fungicide of claim 15, wherein the succinate dehydrogenase inhibitor fungicide is fluxapyroxad.

**17.** A kit comprising the cereals pathogen fungicide as claimed in any one of claims 12 - 16, comprising either,

    i. a composition of the succinate dehydrogenase inhibitor fungicide, and folpet, or
    ii. a composition of the succinate dehydrogenase inhibitor fungicide, and a composition of folpet,

wherein each composition further comprises a carrier.

**18.** The method of controlling *Fusarium graminearum or Fusarium culmorum* on cereals according to any of claims 1 - 11, wherein the mixture or composition is applied at application rates of from 0.1±10% to 100±10% kg a.i./ha.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62786591

**Non-patent literature cited in the description**

- **COLBY S. R.** Calculation of the synergistic and antagonistic responses of herbicide combinations. *journal Weeds,* 1967, vol. 15, 20-22